# EUROPÄISCHE PATENTSCHRIFT

(11) **EP 0 530 935 B1**
(45) Veröffentlichungstag und Bekanntmachung des Hinweises auf die Patenterteilung: **07.12.1994**
(21) Anmeldenummer: 92250239.8
(22) Anmeldetag: 02.09.1992
(51) Int. Cl.: F16H 55/30

(54) **Als Taschenkettenrad ausgebildetes Umlenkrad**
Deflection chain wheel of the pocket type
Roue de déflexion pour chaîne, de type de poches

(30) Priorität: 06.09.1991 DE 4130073
(43) Veröffentlichungstag der Anmeldung: 10.03.1993
(73) Patentinhaber: RUD-KETTENFABRIK RIEGER & DIETZ GMBH U. CO., 73432 Aalen (DE)
(72) Erfinder: Dalferth, Hans, Dipl.-Ing.(FH), W-7080 Aalen-Wasseralfingen (DE)
(74) Vertreter: Böning, Manfred, Dr.-Ing.

(56) Entgegenhaltungen:
- DD-A- 244 609
- DE-C- 3 244 361

## Beschreibung

Die Erfindung betrifft ein als Taschenkettenrad ausgebildetes, insbesondere für Kettenzüge mit Ketten, deren Oberflächenhärte in der Größenordnung von 500 bis 650 HV liegt, bestimmtes Umlenkrad, das im Bereich seiner Taschenzahnpaare mit Stützflächen versehen ist, die mindestens die sich gegenüberliegenden Enden des der Radachse zugewandten Längsschenkels des jeweils stehend in das Umlenkrad einlaufenden vertikalen Kettengliedes abstützen und dieses in einer Position halten, in der es das ihm folgende, liegend in das Umlenkrad einlaufende horizontale Kettenglied derart führt, daß zwischen dessen Bug und den diesem zugewandten Flanken der Zähne des jeweiligen Taschenzahnpaares hohe Flächenpressungen vermieden werden.

Bekannte Umlenkräder der vorstehenden Art haben wie die zusammen mit ihnen jeweils verwendeten Antriebskettenräder eine Oberflächehärte in der Größenordnung von 750 bis 850 HV, während die Oberflächenhärte der sie passierenden Ketten im Bereich von 500 bis 600 HV liegt, so daß der Verschleißangriff weitgehend auf die in bestimmten Zeitabständen austauschbaren Ketten verlagert ist.

Aus der GB-A-11 98 473 ist ein Umlenkrad der vorstehenden Art bekannt, bei dem zwischen den horizontalen Kettengliedern und dem Grund der zu ihrer Aufnahme bestimmten Taschen ein Zwischenraum vorgesehen ist, der Berührungen zwischen dem Taschengrund und den horizontalen Gliedern verhindert. Durch diese Maßnahme soll die Bruchgefahr der horizontalen Kettenglieder reduziert werden. In der Praxis hat sich indessen gezeigt, daß die vorgeschlagene Anordnung in verstärktem Maße zu Brüchen der vertikalen Kettenglieder führt.

Auch der Einsatz von aus der DE-B-12 92 986 bekannten Kettenrädern als Umlenkräder hat sich nicht bewährt. Bei diesen Kettenrädern, bei denen die vertikalen Kettenglieder unabgestützt bleiben, während die horizontalen Kettenglieder auf dem Taschengrund aufliegen, kommt es in der Tat zu den unerwünschten Brüchen der horizontalen Kettenglieder, die durch die Lehre der GB-A-11 98 473 vermieden werden sollen.

Die aufgezeigten Schwierigkeiten haben sich vor allem bei der Herstellung von Kettenzügen für Förderkatzen als problematisch erwiesen, deren Kettenstränge zur Erzielung einer kleinen Bauhöhe des Kettenzuges mehrere Umlenkräder passieren. Der Erfindung liegt die Aufgabe zugrunde, ein insbesondere für diesen Anwendungsfall geeignetes Umlenkrad zu schaffen, bei dem die Gefahr von vorzeitigen Kettengliedbrüchen auf ein bisher nicht erreichtes Maß reduziert ist. Diese Aufgabe wird bei einem Umlenkrad der in Betracht gezogenen Gattung dadurch gelöst, daß den horizontalen Kettengliedern ebenfalls Stützflächen zugeordnet sind und mindestens die Stützflächen für die vertikalen Kettenglieder eine gegenüber der Härte der Kette größere Oberflächenhärte von 650 bis 700 HV aufweisen.

Eine beim erfindungsgemäßen Umlenkrad infolge der Abstützung sowohl der horizontalen als auch der vertikalen Kettenglieder resultierende ungleichmäßige Stützkraftverteilung wird beim Einsatz des Rades innerhalb kürzester Frist dadurch eliminiert, daß sich primär die das Umlenkrad passierenden vertikalen Kettenglieder im Bereich der für sie vorgesehenen Stützflächen aufgrund der vorgeschlagenen Oberflächenhärte mindestens dieser Stützflächen ein die ungleichmäßige Stützkraftverteilung abbauendes Bett schaffen und es als Folge hiervon zu einem gleichmäßigen stoßärmeren Lauf aller Kettenglieder über das Umlenkrad kommt. Die beim Einsatz erfindungsgemäßer Umlenkräder erzielten Standzeitgewinne der Kettenstränge haben sich dabei als überraschend groß erwiesen. Zur Vermeidung von Fehlschlägen ist allerdings darauf hinzuweisen, daß eine Übertragung der ermittelten Erkenntnisse auf Antriebskettenräder negative Folgen zeitigen würde, da das Zusammenspiel zwischen Rad und Kette bei Umlenk- und Antriebsrädern verschiedenen Gesetzen gehorcht.

Die Erfindung wird im folgenden anhand einer in der beigefügten Zeichnung dargestellten, bevorzugten Ausführungsform näher erläutert. Es zeigen:
Fig. 1 einen Schnitt durch ein Umlenkrad,
Fig. 2 - 4 unterschiedliche Positionen von in das Umlenkrad einlaufenden Kettengliedern.

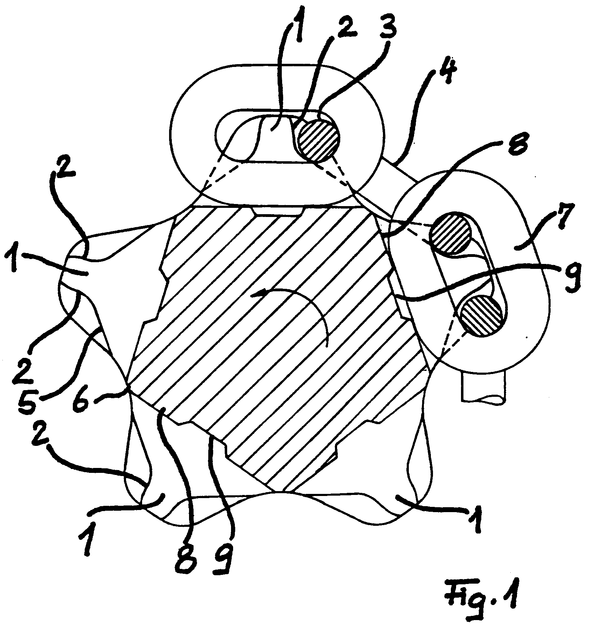

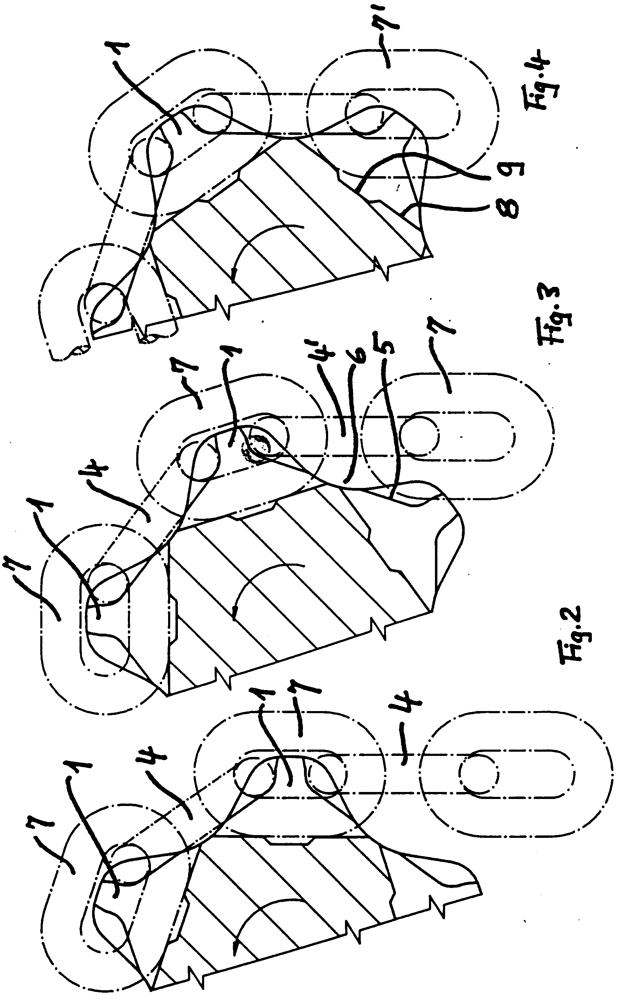

In Figur 1 sind 1 die jeweils hinteren Zähne von Taschenzahnpaaren, zwischen deren Flanken 2 die Buge 3 von horizontalen Kettengliedern 4 zu liegen kommen. Die Zähne 1 haben bei den Umlenkrädern anders als bei Antriebsrädern lediglich eine Hilfsfunktion, die darin besteht, bei ungünstigen Bedingungen, d.h. vornehmlich bei unzureichender Schmierung der Kette, ein zu starkes Auswandern der horizontalen Kettenglieder 4 aus ihrer Soll-Lage zu verhindern. Diese Hilfsfunktion darf hinsichtlich ihrer Bedeutung indes mitnichten unterschätzt werden. Taschenkettenräder als Umlenkräder sind sogenannten Umlenkpolygonen weit überlegen. Bei einwandfreiem Betrieb sollten die horizontalen Kettenglieder 4 mit anderen Worten nicht gegen die Flanken 2 der Zähne 1 zur Anlage kommen, sondern sich nur auf den ihnen zugeordneten Stützflächen 5 abstützen, wie dies aus den Figuren 1 bis 4 hervorgeht. Die Stützflächen 5 sind im zentralen Bereich mit ausreichend großen Mulden 6 versehen, die Platz für die Aufnahme der Schweißgrate der horizontalen Kettenglieder 4 bieten.

Den vertikalen Kettengliedern 7 sind Stützflächen 8 zugeordnet, die ebenfalls Mulden 9 aufweisen, in die die Schweißgrate dieser Glieder eintauchen können.

Um eine möglichst gleichmäßige Verteilung der Kräfte auf die horizontalen und vertikalen Kettenglieder 4 und 7 zu erreichen, werden die Umlenkräder einer Wärmebehandlung unterzogen, die zu einem zweckmäßigen Randhärteverlauf führt. Die Härte von ca. 680 HV an der Oberfläche des Rades und der sich an die Oberflächenhärte anschließende Härteverlauf bieten die Gewähr dafür, daß sich vornehmlich die gehärteten, vorzugsweise eine Härte von 500 bis 650 HV aufweisenden vertikalen Glieder der Ketten leicht und vor allem verhältnismäßig schnell in die Stützflächen einbetten und auf diese Art und Weise eine optimale Abstützung erzielt wird, die die sowohl bei weicheren als auch bei härteren Umlenkrädern gehäuft auftretenden Gliedbrüche auf ein Minimum reduziert. Die Kombination der gezielten Wärmebehandlung mit der Abstützung sowohl der horizontalen als auch der vertikalen Glieder und die hierdurch bedingte automatische Schaffung optimaler Stützverhältnisse verhindert selbst bei mehrfach wechselnden Umlenkungen kritische Wechselbiegebeanspruchungen, deren Beherrschung für den Einsatz von Kettenzügen in Hebezeugen kleiner Bauhöhe eine unabdingbare Voraussetzung darstellt.

Wichtig ist in diesem Zusammenhang zudem eine sinnvolle Abstimmung zwischen den Abmessungen des Umlenkrades und den Abmessungen der Glieder des Kettenstranges, die ein Abwälzen unter starkem Druck zwischen den besonders gefährdeten horizontalen Kettengliedern 4 und dem Umlenkrad beim Einschwenken des jeweiligen Gliedes in seine Stützlage vermeidet, wie dies die Figur 3 bezüglich des horizontalen Gliedes 4' erkennen läßt. Demgegenüber ist eine derartige Abwälzbewegung zwischen den vertikalen Kettengliedern 7, wie es in Figur 4 anhand des Gliedes 7' erkennbar ist, weit weniger kritisch.

## Patentansprüche

1. Als Taschenkettenrad ausgebildetes, insbesondere für Kettenzüge mit Ketten, deren Oberflächenhärte in der Größenordnung von 500 bis 650 HV liegt, bestimmtes Umlenkrad, das im Bereich seiner Taschenzahnpaare mit Stützflächen (8) versehen ist, die mindestens die sich gegenüberliegenden Enden des der Radachse zugewandten Längsschenkels des jeweils stehend in das Umlenkrad einlaufenden vertikalen Kettengliedes (7) abstützen und dieses in einer Position halten, in der es das ihm folgende, liegend in das Umlenkrad einlaufende horizontale Kettenglied (4) derart führt, daß zwischen dessen Bug (3) und den diesem zugewandten Flanken (2) der Zähne des jeweiligen Taschenzahnpaares hohe Flächenpressungen vermieden werden, **dadurch gekennzeichnet**, daß den horizontalen Kettengliedern (4) ebenfalls Stützflächen (5) zugeordnet sind und mindestens die Stützflächen (8) für die vertikalen Kettenglieder (7) eine gegenüber der Härte der Kette größere Oberflächenhärte von 650 bis 700 HV aufweisen.

2. Umlenkrad nach Anspruch 1, **dadurch gekennzeichnet**, daß seine sämtlichen mit den Kettengliedern (4,7) zusammenwirkenden Teile eine Oberflächenhärte von 650 bis 700 HV haben.

3. Umlenkrad nach Anspruch 1 oder 2, **dadurch gekennzeichnet**, daß die Oberflächenhärte mindestens der Stützflächen (8) für die vertikalen Kettenglieder (7) etwa 680 HV beträgt.

## Claims

1. A deflection or return wheel in the form of a pocket chain wheel especially for chain hoists which have chains of surface hardness 500 to 650 HV (Vickers Hardness), the said deflection or return wheel being provided in the region of its pocket tooth pairs with supporting surfaces (8) which support at least the opposing ends of the longitudinal limb facing the wheel axle of the vertical chain link (7) entering the deflection or return wheel and hold it in a position in which it guides the horizontal chain link (4) which follows it and enters the deflection or return wheel in a lying position, so as to avoid high surface pressures between its front end (3) and the flanks (2) of the teeth of the respective pocket tooth pair facing it, **characterised in that** supporting surfaces (5) are similarly assigned to the horizontal chain links (4) and at least the supporting surfaces (8) for the vertical chain links (7) have a surface hardness of 650 to 700 HV which is greater than the hardness of the chain.

2. Deflection or return wheel according to claim 1, **characterised in that** all of its parts working in conjunction with the chain links (4, 7) have a surface hardness of 650 to 700 HV.

3. Deflection or return wheel according to claim 1 or claim 2, **characterised in that** the surface hardness of at least the supporting surfaces (8) for the vertical chain links (7) is approximately 680 HV.

## Revendications

1. Roue de renvoi, réalisée sous la forme d'une roue à chaîne à alvéoles, notamment pour palan à chaîne comportant des chaînes, dont l'ordre de grandeur de la dureté superficielle est compris entre 500 et 650 Vickers, qui est pourvue, dans la zone de ses paires de dents d'alvéole, de surfaces d'appui (8) qui soutiennent au moins les extrémités, qui se font face, de la branche longitudinale, tournée vers l'axe de la roue, du maillon de chaîne vertical (7) qui entre chaque fois en position verticale dans la roue de renvoi, les surfaces d'appui maintenant ce maillon de chaîne vertical dans une position dans laquelle il guide le maillon de chaîne "horizontal" (4) qui le suit et entre en position couchée dans la roue de renvoi, d'une façon telle que des pressions superficielles élevées sont évitées entre le coude (3) de ce maillon de chaîne "horizontal" et les flancs (2), qui font face à ce dernier, des dents de la paire correspondante de dents d'alvéole, caractérisée en ce que des surfaces d'appui (5) sont aussi associées aux maillons de chaîne "horizontaux" (4) et en ce qu'au moins les surfaces d'appui (8) associées aux maillons de chaîne verticaux (7) ont une dureté superficielle, comprise entre 650 et 700 Vickers, qui est supérieure à la dureté de la chaîne.

2. Roue de renvoi selon la revendication 1, caractérisée en ce que toutes ses parties qui coopèrent avec les maillons de chaîne (4, 7) ont une dureté superficielle comprise entre 650 et 700 Vickers.

3. Roue de renvoi selon l'une des revendications 1 et 2, caractérisée en ce que la dureté superficielle au moins des surfaces d'appui (8) associées aux maillons de chaîne verticaux (7) est égale à 680 Vickers environ.
